# EUROPEAN PATENT APPLICATION

(11) **EP 4 851 337 A1**
(43) Date of publication of application: **09.12.2026**
(21) Application number: 24921957.7
(22) Date of filing: 15.11.2024
(51) Int. Cl.: C25B 9/23, C25B 11/054, H01M 4/88, H01M 8/10, H01M 8/1004, H01M 8/1069

(54) **METHOD FOR PRODUCING ELECTROLYTE MEMBRANE LAMINATE, AND ELECTROLYTE MEMBRANE LAMINATE**

(30) Priority: 31.01.2024 JP 2024013639
(71) Applicant: FUJIFILM Corporation, Tokyo 106-8620 (JP)
(72) Inventor: UMEMORI, Kenichi, ashigara-shi, Kanagawa 250-0193 (JP); IWASE, Eijiro, ashigara-shi, Kanagawa 250-0193 (JP)
(74) Representative: Dehns Germany Partnerschaft mbB
(86) International application number: PCT/JP2024/040726
(87) International publication number: WO 2025/164038

(57) **Abstract**

There are provided a method for manufacturing an electrolyte membrane laminate, the method including: a step of preparing a plurality of transfer substrates having a catalyst layer on a temporary support; a step of disposing the plurality of transfer substrates on an electrolyte membrane such that the electrolyte membrane and the catalyst layer are in contact with each other, in a state where at least some of the plurality of transfer substrates are in contact with each other; a step of thermocompression-bonding the electrolyte membrane and the plurality of transfer substrates; and a step of peeling off the temporary support, and applications thereof.

## Description

### BACKGROUND OF THE INVENTION

### 1. Field of the Invention

The present disclosure relates to a method for manufacturing an electrolyte membrane laminate and an electrolyte membrane laminate.

### 2. Description of the Related Art

In recent years, the use of hydrogen has been attracting attention from the viewpoint of utilizing renewable energy. In addition, examples of a hydrogen production method include solid polymer water electrolysis. In solid polymer water electrolysis, in recent years, a catalyst layer-coated membrane (CCM) in which an electrode catalyst layer containing a catalyst for water electrolysis and a solid electrolyte (for example, an ionomer resin) is formed on both sides of a solid polymer membrane (polymer electrolyte membrane (PEM)) which is an ion-exchange membrane has been used as a member constituting a water electrolysis apparatus.

For example, JP2008-258175A discloses a transfer sheet for manufacturing a catalyst layer-electrolyte membrane laminate, in which a catalyst layer is formed by applying a paste composition onto a substrate and drying the paste composition.

JP2007-123235A discloses a membrane-electrode assembly for a fuel cell, in which a first region 7a containing catalyst particles having high hydrophilicity and a second region 7b containing catalyst particles having low hydrophilicity are formed in a checkered pattern or a stripe pattern.

WO2011/111419A discloses a method for manufacturing a membrane-electrode assembly consisting of a catalyst layer and a solid polymer electrolyte membrane, the method including: a preheating step of preheating a catalyst layer-supporting substrate in which the catalyst layer is supported on one surface of a transfer substrate and a solid polymer electrolyte membrane; a thermocompression-bonding step of heating and pressurizing the catalyst layer-supporting substrate and the solid polymer electrolyte membrane to form an integrated bonded member; and a peeling step of peeling off the transfer substrate from the bonded member.

### SUMMARY OF THE INVENTION

With the increase in size of a water electrolysis apparatus and a fuel cell, a catalyst layer-coated membrane (electrolyte membrane laminate) having a larger area is required. In addition, the electrolyte membrane laminate having a large area is required to have uniformity in thickness.

An object to be achieved by an embodiment of the present disclosure has been made in view of the above circumstances, and is to provide an electrolyte membrane laminate having a larger area and excellent uniformity in thickness as compared with the related art, and a method for manufacturing the same.

The present disclosure includes the following aspects.
<1> A method for manufacturing an electrolyte membrane laminate, the method comprising:
   a step of preparing a plurality of transfer substrates having a catalyst layer on a temporary support;
   a step of disposing the plurality of transfer substrates on an electrolyte membrane such that the electrolyte membrane and the catalyst layer are in contact with each other, in a state where at least some of the plurality of transfer substrates are in contact with each other;
   a step of thermocompression-bonding the electrolyte membrane and the plurality of transfer substrates; and
   a step of peeling off the temporary support.
<2> The method for manufacturing an electrolyte membrane laminate according to <1>,
   in which all of the plurality of transfer substrates in a state of being in contact with each other are thermocompression-bonded to the electrolyte membrane.
<3> The method for manufacturing an electrolyte membrane laminate according to <1> or <2>,
   in which a thickness of the temporary support is 250 µm or less.
<4> The method for manufacturing an electrolyte membrane laminate according to any one of <1> to <3>,
   in which in the disposing step, the plurality of transfer substrates are disposed with an overlap portion in which the transfer substrates overlap each other.
<5> The method for manufacturing an electrolyte membrane laminate according to <4>,
   in which a width of the overlap portion is more than 0 mm and 5 mm or less.
<6> The method for manufacturing an electrolyte membrane laminate according to any one of <1> to <5>, the method further comprising:
   a step of heating the transfer substrates and the electrolyte membrane before the thermocompression-bonding step.
<7> The method for manufacturing an electrolyte membrane laminate according to any one of <1> to <6>,
   in which the step of disposing the plurality of transfer substrates, the thermocompression-bonding step, and the step of peeling off the temporary support are performed for two main surfaces of the electrolyte membrane.
<8> The method for manufacturing an electrolyte membrane laminate according to any one of <1> to <7>,
   in which a content of a solvent contained in the catalyst layer of the transfer substrate is 1% by mass to 10% by mass.
<9> The method for manufacturing an electrolyte membrane laminate according to any one of <1> to <8>, the method further comprising:
   thermocompression-bonding the electrolyte membrane and the catalyst layer after the peeling step.
<10> An electrolyte membrane laminate comprising:
   an electrolyte membrane; and
   an electrode catalyst layer formed on the electrolyte membrane and having a plurality of catalyst layers joined together in the same plane.
<11> The electrolyte membrane laminate according to <10>,
   in which the electrode catalyst layer is provided on both surfaces of the electrolyte membrane.

According to an embodiment of the present disclosure, there are provided an electrolyte membrane laminate having a larger area and more excellent thickness uniformity than those in the related art, and a method for manufacturing the same.

### DESCRIPTION OF THE PREFERRED EMBODIMENTS

In the present disclosure, a numerical range shown using "to" means a range including numerical values described before and after "to" as a minimum value and a maximum value, respectively.

In the present disclosure, the term "step" includes not only an independent step but also a step that cannot be clearly distinguished from other steps as long as the intended purpose of the step is achieved.

In a numerical range described in a stepwise manner in the present disclosure, an upper limit value or a lower limit value described in a certain numerical range may be replaced with an upper limit value or a lower limit value in another numerical range described in a stepwise manner. In addition, in a numerical range described in the present disclosure, an upper limit value or a lower limit value described in a certain numerical range may be replaced with a value shown in Examples.

In the present disclosure, a combination of two or more preferred aspects or modes is a more preferred aspect or mode.

### [Electrolyte membrane laminate]

A method for manufacturing an electrolyte membrane laminate according to the present disclosure includes a step of preparing a plurality of transfer substrates having a catalyst layer on a temporary support (hereinafter, also referred to as a "transfer substrate preparation step"), a step of disposing the plurality of transfer substrates on an electrolyte membrane such that the electrolyte membrane and the catalyst layer are in contact with each other, in a state where at least some of the plurality of transfer substrates are in contact with each other (hereinafter, also referred to as a "transfer substrate disposition step"), a step of thermocompression-bonding the electrolyte membrane and the plurality of transfer substrates (hereinafter, also referred to as a "thermocompression-bonding step"), and a step of peeling off the temporary support (hereinafter, also referred to as a "temporary support peeling step").

In the related art, in a case of manufacturing an electrolyte membrane laminate having a large area, a large amount of a composition for a catalyst layer is applied onto the large-area electrolyte membrane and dried. However, in a case of manufacturing an electrolyte membrane laminate by this method, large coating equipment and a large drying device are required, and it is difficult to further increase the area. In addition, in a case of attempting to form a film by applying a large amount of the composition for a catalyst layer, the thickness is likely to be uneven, and it is difficult to form an electrode catalyst layer having a uniform thickness.

On the other hand, in the method for manufacturing an electrolyte membrane laminate according to the present disclosure, by using the plurality of transfer substrates having a catalyst layer on a temporary support, the electrolyte membrane and the plurality of transfer substrates disposed in a state of being in contact with each other are thermocompression-bonded to each other, and thus an electrolyte membrane laminate having a large area (for example, an area of 1,000 mm × 1,000 mm or more) and having excellent uniformity of thickness is obtained.

JP2008-258175A discloses an aspect in which a plurality of catalyst layers are disposed to be spaced apart from each other on an electrolyte membrane, and it is not assumed that a plurality of transfer substrates are disposed in a state where the plurality of transfer substrates are in contact with each other.

JP2007-123235A describes that catalyst layers having different physical properties are disposed side by side, and the method for manufacturing an electrolyte membrane laminate according to the present disclosure is technically different from the method described in JP2007-123235.

WO2011/111419A does not describe the disposition of a plurality of transfer substrates.

### <Transfer substrate preparation step>

The method for manufacturing an electrolyte membrane laminate according to the present disclosure includes a step of preparing a plurality of transfer substrates having a catalyst layer on a temporary support.

### (Transfer substrate)

A transfer material has a temporary support and a catalyst layer formed on the temporary support.

The temporary support is not particularly limited as long as it is a substrate that can hold the catalyst layer and can be peeled off after the thermocompression-bonding step.

Examples of the temporary support include polymer films such as polyimide, polyethylene terephthalate, poly-p-aramid, polyamide (nylon), polysulfone, polyethersulfone, polyphenylene sulfide, polyether ether ketone, polyetherimide, polyacrylate, and polyethylene naphthalate.

In addition, the temporary support may be a film of a fluororesin such as an ethylene-tetrafluoroethylene copolymer, a tetrafluoroethylene-hexafluoropropylene copolymer, a tetrafluoro-perfluoroalkyl vinyl ether copolymer, and polytetrafluoroethylene (PTFE).

A thickness of the temporary support is not particularly limited, but is preferably 250 µm or less and more preferably 50 µm. A lower limit value of the thickness is, for example, 30 µm.

The thickness of the temporary support is measured by the method described in JIS K 7130: 1999.

A method of providing the catalyst layer on the temporary support is not particularly limited, and may be a method of bonding the temporary support and the sheet for a catalyst layer, or a method of applying the catalyst-containing dispersion liquid onto the temporary support and drying the catalyst-containing dispersion liquid.

From the viewpoint of productivity, it is preferable that the transfer substrate is produced by applying the catalyst-containing dispersion liquid onto the temporary support and drying the catalyst-containing dispersion liquid. A coating method is not particularly limited, and a known coating method can be used.

It is preferable that the plurality of transfer substrates are produced by applying the same catalyst-containing dispersion liquid onto the plurality of temporary supports and drying the catalyst-containing dispersion liquid. By using the same catalyst-containing dispersion liquid for the plurality of temporary supports, it is possible to produce an electrolyte membrane laminate having a large area without unevenness of components.

Examples of the coating device include a bar coater, a screen printer, a doctor blade, a reverse coater, a die coater, a spray coater, a gravure coater, and a comma coater.

The catalyst-containing dispersion liquid preferably contains a catalyst, a binder, and a solvent. The catalyst layer preferably contains a catalyst and a binder.

Examples of the catalyst include metals such as platinum, gold, ruthenium, iridium, rhodium, palladium, osmium, tungsten, lead, iron, chromium, cobalt, nickel, manganese, vanadium, molybdenum, gallium, and aluminum, and alloys thereof. From the viewpoint of catalytic activity and durability, the catalyst preferably contains platinum.

The catalyst is preferably supported on a carbon material.

Examples of the carbon material include carbon black, activated carbon, coke, natural graphite, and artificial graphite, and specific examples thereof include ketjen black, vulcan black, acetylene black, carbon fiber, single-wall carbon nanotube, multi-wall carbon nanotube, graphitized ketjen black, graphitized vulcan black, and graphitized acetylene black.

The binder is preferably a polymer having a proton-donating group.

Examples of the binder include heat-resistant aromatic polymers such as a perfluorocarbon sulfonic acid polymer represented by Nafion (registered trademark), poly(meth)acrylate having a phosphate group in a side chain, sulfonated polyether ether ketone, sulfonated polyether ketone, sulfonated polyethersulfone, sulfonated polysulfone, and sulfonated polybenzimidazole; and sulfonated polystyrene, sulfonated polyoxetane, sulfonated polyimide, sulfonated polyphenylene sulfide, sulfonated polyphenylene oxide, and sulfonated polyphenylene.

Examples of the solvent include water, methanol, ethanol, n-propanol, iso-propanol, n-butanol, sec-butanol, and tert-butanol.

A method of applying the catalyst-containing dispersion liquid onto the temporary support and then drying the catalyst-containing dispersion liquid is not particularly limited, and a known drying method can be used.

A drying temperature is, for example, 25°C to 130°C.

A drying time is, for example, 1 minute to 1 hour.

A thickness of the catalyst layer is not particularly limited, but from the viewpoint of securing the supported amount, it is preferably 0.1 µm to 30 µm and more preferably 1 µm to 20 µm.

The thickness of the catalyst layer is measured by the method described in JIS K 7130: 1999.

The number of transfer substrates prepared in the transfer substrate preparation step is 2 or more, and is appropriately adjusted according to the size of the electrolyte membrane laminate to be manufactured.

A shape of the transfer substrate prepared in the transfer substrate preparation step is not particularly limited, but is preferably a rectangular shape (for example, a rectangular shape or a square shape).

In a case where the transfer substrate has a rectangular shape, from the viewpoint of coatability, a length of one side is preferably 10 cm to 230 cm.

A content of the solvent contained in the catalyst layer of the transfer substrate is preferably 1% by mass to 10% by mass and more preferably 2% by mass to 5% by mass.

In a case where the content of the solvent contained in the catalyst layer of the transfer substrate is within the above-described range, the adhesiveness between the catalyst layer and the electrolyte membrane is improved.

In a case where the transfer substrate is manufactured by applying the catalyst-containing dispersion liquid onto the temporary support, the content of the solvent contained in the catalyst layer of the transfer substrate can be adjusted by the drying conditions.

The content of the solvent contained in the catalyst layer of the transfer substrate is measured by a method such as component identification using a combination of gas chromatography and a detector.

### <Transfer substrate disposition step>

The method for manufacturing an electrolyte membrane laminate according to the present disclosure includes a step of arranging a plurality of transfer substrates on the electrolyte membrane in a state where at least some of the plurality of transfer substrates are in contact with each other such that the electrolyte membrane and the catalyst layer are in contact with each other.

Examples of the electrolyte membrane include a fluorine-based electrolyte membrane and a hydrocarbon-based electrolyte membrane. Specific examples of the electrolyte membrane include a perfluorocarbon sulfonic acid polymer represented by Nafion (registered trademark), a poly(meth)acrylate having a phosphate group in a side chain, a sulfonated polyether ether ketone, a sulfonated polyether ketone, a sulfonated polyethersulfone, a heat-resistant aromatic polymer such as a sulfonated polysulfone, a sulfonated polybenzimidazole, a sulfonated polystyrene, a sulfonated polyoxetane, a sulfonated polyimide, a sulfonated polyphenylene sulfide, a sulfonated polyphenylene oxide, and a sulfonated polyphenylene.

A thickness of the electrolyte membrane is preferably 30 µm to 250 µm and more preferably 50 µm to 200 µm.

The thickness of the electrolyte membrane is measured by the method described in JIS K 7130: 1999.

In the transfer substrate disposition step, the plurality of transfer substrates are arranged on the electrolyte membrane in a state of being in contact with each other. In this case, the transfer substrate is arranged such that the catalyst layer and the electrolyte membrane are in contact with each other. In addition, by arranging the plurality of transfer substrates in a state where the plurality of transfer substrates are in contact with each other and bonding the catalyst layers of the plurality of transfer substrates in the next thermocompression-bonding step, an electrode catalyst layer having a larger area and better thickness uniformity than in the related art can be obtained. As a result, it is possible to manufacture an electrolyte membrane laminate provided with a large-area electrode catalyst layer.

In the transfer substrate disposition step, it is preferable to arrange the plurality of transfer substrates with an overlap portion where the plurality of transfer substrates overlap each other. By providing the overlap portion, it is possible to more stably form a large-area electrode catalyst layer having excellent thickness uniformity in the next thermocompression-bonding step.

A width of the overlap portion is preferably more than 0 mm and 5 mm or less.

By setting the width of the overlap portion to 5 mm or less, it is possible to efficiently manufacture a large-area electrolyte membrane laminate having excellent thickness uniformity.

The "width of the overlap portion" refers to a shortest distance between one end part and the other end part of the two transfer substrates in the overlap portion where the two transfer substrates overlap each other.

### <Thermocompression-bonding step>

The method for manufacturing an electrolyte membrane laminate according to the present disclosure includes a step of thermocompression-bonding the electrolyte membrane and the plurality of transfer substrates.

The thermocompression-bonding step can be performed using a known thermocompression-bonding device, for example, by a method of pressing a heating member, a method of sandwiching with a heating member, or the like. Examples of the heating member include a heating plate, a heat block, and a heat roll, and a laminator comprising a pair of heat rolls may be used to perform thermocompression-bonding by passing between the pair of heat rolls.

A temperature of the thermocompression-bonding is preferably 80°C to 200°C and more preferably 130°C to 180°C.

A pressure of the thermocompression-bonding is preferably 0.1 MPa to 5 MPa and more preferably 0.5 MPa to 3 MPa.

In the thermocompression-bonding step, it is preferable that all of the plurality of transfer substrates are collectively thermocompression-bonded against the electrolyte membrane. Examples of the method of collectively performing thermocompression-bonding include a method of performing thermocompression-bonding at the same timing using a thermocompression-bonding device.

By collectively performing thermocompression-bonding on the plurality of transfer substrates, it is possible to efficiently manufacture an electrolyte membrane laminate having a large area and excellent uniformity in thickness.

### <Temporary support peeling step>

The method for manufacturing an electrolyte membrane laminate according to the present disclosure includes a step of peeling off the temporary support from the bonded member of the electrolyte membrane and the plurality of transfer substrates. By peeling off and removing the temporary support, the plurality of catalyst layers are transferred onto the electrolyte membrane, and the electrode catalyst layer consisting of the plurality of catalyst layers can be formed on the electrolyte membrane.

The method of peeling off the temporary support is not particularly limited, and the peeling can be performed by a known method.

The method for manufacturing an electrolyte membrane laminate according to the present disclosure may include other steps in addition to the transfer substrate preparation step, the transfer substrate disposition step, the thermocompression-bonding step, and the temporary support peeling step.

A step of heating the transfer substrate and the electrolyte membrane may be provided before the thermocompression-bonding step. By heating the transfer substrate and the electrolyte membrane, the catalyst layer contained in the transfer substrate is softened, and the adhesiveness to the electrolyte membrane is improved.

The heating means for the transfer substrate and the electrolyte membrane is not particularly limited, and known heating means can be used.

The heating temperature of the transfer substrate is, for example, 50°C to 200°C.

The heating temperature of the electrolyte membrane is, for example, 50°C to 150°C.

In addition, in a case where an overlap portion in which a plurality of transfer substrates overlap each other is disposed in the transfer substrate disposition step, it is preferable that the method for manufacturing an electrolyte membrane laminate according to the present disclosure includes a step of removing the overlap portion after the thermocompression-bonding step.

Examples of a method of removing the overlap portion include a method of pressing and pulling a pressure-sensitive adhesive roll against the overlap portion.

In addition, it is preferable that the temporary support is peeled off after the thermocompression-bonding step, and then the electrolyte membrane and the catalyst layer are further thermocompression-bonded. By providing the thermocompression-bonding step after the peeling of the temporary support, it is possible to form a large-area electrode catalyst layer having more excellent thickness uniformity.

The number of times of thermocompression-bonding performed after the first thermocompression-bonding step is, for example, 1 to 5 times.

The conditions for the thermocompression-bonding in the second and subsequent thermocompression-bonding steps may be the same as or different from the conditions for the thermocompression-bonding in the first thermocompression-bonding step.

Further, it is preferable that the method for manufacturing an electrolyte membrane laminate according to the present disclosure includes the transfer substrate disposition step, the thermocompression-bonding step, and the temporary support peeling step for two main surfaces of the electrolyte membrane.

The two main surfaces of the electrolyte membrane refer to two surfaces which face each other and have a larger area than the other surfaces.

The transfer substrate disposition step, the thermocompression-bonding step, and the temporary support peeling step for one surface of the two main surfaces of the electrolyte membrane may be the same as or different from the transfer substrate disposition step, the thermocompression-bonding step, and the temporary support peeling step for the other surface of the two main surfaces of the electrolyte membrane.

Preferred aspects of the transfer substrate disposition step, the thermocompression-bonding step, and the temporary support peeling step are as described above.

### [Electrolyte membrane laminate]

The electrolyte membrane laminate according to the present disclosure includes an electrolyte membrane, and an electrode catalyst layer in which a plurality of catalyst layers formed on the electrolyte membrane are bonded to each other in the same plane.

Preferred aspects of the electrolyte membrane and the catalyst layer are as described above.

The electrode catalyst layer is a layer in which a plurality of catalyst layers are bonded to each other in the same plane.

The fact that the plurality of catalyst layers are bonded to each other in the same plane means that the plurality of catalyst layers are in a state of being connected to each other on a certain plane.

The electrolyte membrane laminate according to the present disclosure includes a bonded catalyst layer, and is different from an aspect in the related art in which one catalyst layer is formed on the electrolyte membrane.

The electrolyte membrane laminate according to the present disclosure has the same appearance as that in the related art, but for example, by observing a surface of the bonded catalyst layer with a scanning electron microscope (SEM), it is possible to confirm that the plurality of catalyst layers are bonded to each other in the same plane.

It is preferable that the electrolyte membrane laminate according to the present disclosure includes bonded catalyst layers on both surfaces of the electrolyte membrane.

### Examples

Hereinafter, the present invention will be described in more detail with reference to Examples. The materials, the amounts of materials used, the proportions, the details of each step, and the like shown in the following Examples can be appropriately changed without departing from the gist of the present invention. Therefore, the scope of the present invention is not limited to the following specific examples.

It is noted that "parts" are all on a mass basis.

### [Example 1]

### <Transfer substrate preparation step>

72 g of a platinum carbon black-supported catalyst (product name "TEC10E50", manufactured by Tanaka Kikinzoku Kogyo K.K.) and 476 g of isopropanol (IPA) were stirred and mixed with a disperser to prepare a dispersion liquid of the platinum carbon black-supported catalyst.

210 g of a 20 mass% polymer dispersion liquid (product name "Nafion (registered trademark) D-2020", manufactured by Chemours) was added to the dispersion liquid, and the mixture was stirred and mixed with a disperser to obtain a dispersion liquid for a catalyst layer.

The dispersion liquid for a catalyst layer was applied onto a PTFE film (product name "NITOFLON No. 900 UL", manufactured by Nitto Denko Corporation, thickness: 50 µm, 40 cm × 120 cm) as a temporary support, and dried at 90°C for 10 minutes. In this manner, a transfer substrate on which a catalyst layer having a thickness of 200 µm was formed on the temporary support was obtained.

A content of a solvent contained in the catalyst layer of the transfer substrate was 1% by mass.

### <Transfer substrate disposition step>

Three transfer substrates (40 cm × 120 cm) were arranged on an electrolyte membrane (product name "Nafion (registered trademark) N115", manufactured by DuPont, thickness: 127 µm, 120 cm square) such that the electrolyte membrane and the catalyst layer were in contact with each other. A width of an overlap portion between the transfer substrates was set to 1 mm.

### <Preheating step>

The electrolyte membrane and the transfer substrates were heated in advance using a hot plate heated by a heater at a temperature of 100°C for 3 minutes.

### <Thermocompression-bonding step>

Using a heat laminator, three transfer substrates overlapping each other were thermocompression-bonded to the electrolyte membrane at a temperature of 135°C and a press pressure of 1 MPa to obtain a laminate.

### <Temporary support peeling step>

The temporary support and the overlap portion between the transfer substrates were peeled off from the laminate using a pressure-sensitive adhesive roll, and the catalyst layer was transferred onto the electrolyte membrane to form an electrode catalyst layer. In this manner, an electrolyte membrane laminate was obtained.

### [Example 2]

An electrolyte membrane laminate was obtained by the same method as in Example 1, except that the thickness of the temporary support was changed to 250 µm.

### [Example 3]

A transfer substrate was obtained in the same manner as in Example 1, except that the dispersion liquid for a catalyst layer was applied onto the temporary support and dried, and then vacuum-dried at 90°C for 1 hour. The content of the solvent contained in the catalyst layer of the transfer substrate was 0.1% by mass.

Then, an electrolyte membrane laminate was obtained by the same method as in Example 1, except that the above-described transfer substrate was used.

### [Example 4]

A transfer substrate was obtained in the same manner as in Example 1, except that the dispersion liquid for a catalyst layer was applied onto the temporary support and dried at 90°C for 15 seconds. The content of the solvent contained in the catalyst layer of the transfer substrate was 8% by mass.

Then, an electrolyte membrane laminate was obtained by the same method as in Example 1, except that the above-described transfer substrate was used.

### [Example 5]

An electrolyte membrane laminate was obtained by the same method as in Example 1, except that the thickness of the temporary support was changed to 300 µm.

### [Example 6]

A transfer substrate was obtained in the same manner as in Example 1, except that the dispersion liquid for a catalyst layer was applied onto the temporary support and dried, and then vacuum-dried at 90°C for 60 minutes. The content of the solvent contained in the catalyst layer of the transfer substrate was 15% by mass.

Then, an electrolyte membrane laminate was obtained by the same method as in Example 1, except that the above-described transfer substrate was used.

### [Example 7]

An electrolyte membrane laminate was obtained by the same method as in Example 1, except that the preheating step was not performed.

### [Comparative Example 1]

An electrolyte membrane laminate was obtained by the same method as in Example 1, except that the following points were adopted.

In the transfer substrate preparation step, by setting the size of the temporary support to 120 cm square, a transfer substrate was obtained by forming a catalyst layer having a size of 120 cm square.

In the transfer substrate disposition step, one transfer substrate having a size of 120 cm square was arranged on the electrolyte membrane.

### <<Evaluation>>

### -Uniformity of thickness-

The thickness of the obtained electrolyte membrane laminate was measured by cross-sectional observation with a scanning electron microscope (SEM).

Specifically, six points were cut out in the width direction (120 cm width) at a pitch of 20 cm, frozen with liquid nitrogen, and a cross section was obtained with a razor blade.

A difference (µm) between the maximum value and the minimum value of the thickness in the width direction was calculated.

It can be said that the smaller the difference between the maximum value and the minimum value of the thickness, the more excellent the uniformity of the thickness.

### -External appearance-

The external appearance of the obtained electrolyte membrane laminate was visually observed and evaluated. The evaluation standards are as follows.
A: Good.
B: The external appearance was slightly inferior, but there was no problem in practical use.
C: There was a problem in the external appearance, and there was a problem in practical use.

### -Adhesiveness-

In order to confirm the adhesiveness between the catalyst layer and the electrolyte membrane in the obtained electrolyte membrane laminate, an adhesion test (cross-cut method) was performed in accordance with JIS K5600. The evaluation standards are as follows.
A: No peeling occurred.
B: Peeling occurred.

**[Table 1]**

| | Temporary substrate | Preheat | Transfer substrate | Disposition of transfer substrate | Evaluation | | |
|---|---|---|---|---|---|---|---|
| | Thickness (µm) | | Content of solvent (mass %) | The number of sheets | Uniformity in thickness (µm) | Appearance | Adhesiveness |
| Example 1 | 50 | Y | 1 | 3 | 4 | A | A |
| Example 2 | 250 | Y | 1 | 3 | 4 | A | A |
| Example 3 | 50 | Y | 0.1 | 3 | 4 | A | A |
| Example 4 | 50 | Y | 8 | 3 | 4 | A | A |
| Example 5 | 300 | Y | 1 | 3 | 4 | B | A |
| Example 6 | 50 | Y | 15 | 3 | 4 | B | A |
| Example 7 | 50 | N | 1 | 3 | 4 | B | A |
| Comparative Example 1 | 50 | N | 8 | 1 | 10 | C | A |

As shown in Table 1, in Examples 1 to 7, the electrolyte membrane laminate having a larger area and excellent thickness uniformity as compared with the related art was obtained, the electrolyte membrane laminate including a step of preparing a plurality of transfer substrates having a catalyst layer on a temporary support, a step of disposing the plurality of transfer substrates on the electrolyte membrane in a state where at least some of the plurality of transfer substrates were in contact with each other such that the electrolyte membrane and the catalyst layer were in contact with each other, a step of thermocompression-bonding the electrolyte membrane and the plurality of transfer substrates, and a step of peeling off the temporary support.

The disclosure of Japanese Patent Application No. 2024-013639 filed on January 31, 2024 is incorporated in the present specification by reference. In addition, all documents, patent applications, and technical standards described in the present specification are incorporated herein by reference to the same extent as in a case where each of the documents, patent applications, and technical standards are specifically and individually indicated to be incorporated by reference.

## Claims

1. A method for manufacturing an electrolyte membrane laminate, the method comprising:
a step of preparing a plurality of transfer substrates having a catalyst layer on a temporary support;
a step of disposing the plurality of transfer substrates on an electrolyte membrane such that the electrolyte membrane and the catalyst layer are in contact with each other, in a state where at least some of the plurality of transfer substrates are in contact with each other;
a step of thermocompression-bonding the electrolyte membrane and the plurality of transfer substrates; and
a step of peeling off the temporary support.

2. The method for manufacturing an electrolyte membrane laminate according to claim 1,
wherein all of the plurality of transfer substrates in a state of being in contact with each other are thermocompression-bonded to the electrolyte membrane.

3. The method for manufacturing an electrolyte membrane laminate according to claim 1 or 2,
wherein a thickness of the temporary support is 250 µm or less.

4. The method for manufacturing an electrolyte membrane laminate according to claim 1 or 2,
wherein in the disposing step, the plurality of transfer substrates are disposed with an overlap portion in which the transfer substrates overlap each other.

5. The method for manufacturing an electrolyte membrane laminate according to claim 4,
wherein a width of the overlap portion is more than 0 mm and 5 mm or less.

6. The method for manufacturing an electrolyte membrane laminate according to claim 1 or 2, the method further comprising:
a step of heating the transfer substrates and the electrolyte membrane before the thermocompression-bonding step.

7. The method for manufacturing an electrolyte membrane laminate according to claim 1 or 2,
wherein the step of disposing the plurality of transfer substrates, the thermocompression-bonding step, and the step of peeling off the temporary support are performed for two main surfaces of the electrolyte membrane.

8. The method for manufacturing an electrolyte membrane laminate according to claim 1 or 2,
wherein a content of a solvent contained in the catalyst layer of the transfer substrate is 1% by mass to 10% by mass.

9. The method for manufacturing an electrolyte membrane laminate according to claim 1 or 2, the method further comprising:
thermocompression-bonding the electrolyte membrane and the catalyst layer after the peeling step.

10. An electrolyte membrane laminate comprising:
an electrolyte membrane; and
an electrode catalyst layer formed on the electrolyte membrane and having a plurality of catalyst layers joined together in the same plane.

11. The electrolyte membrane laminate according to claim 10,
wherein the electrode catalyst layer is provided on both surfaces of the electrolyte membrane.
